Europäisches Patentamt

European Patent Office

Office européen des brevets

(19)

(11) Numéro de publication : **0 349 449 B1**

(12) **FASCICULE DE BREVET EUROPEEN**

(45) Date de publication du fascicule du brevet :
13.05.92 Bulletin 92/20

(51) Int. Cl.⁵ : **C22B 58/00, C22B 9/02**

(21) Numéro de dépôt : **89420231.6**

(22) Date de dépôt : **27.06.89**

(54) **Procédé de purification du gallium par solidification partielle.**

(30) Priorité : **01.07.88 FR 8809503**

(43) Date de publication de la demande :
**03.01.90 Bulletin 90/01**

(45) Mention de la délivrance du brevet :
**13.05.92 Bulletin 92/20**

(84) Etats contractants désignés :
**AT BE CH DE ES GB GR IT LI LU NL SE**

(56) Documents cités :
**EP-A- 0 091 386**
**EP-A- 0 236 238**
**FR-A- 2 445 381**
**US-A- 3 211 547**
**US-A- 3 671 229**
**PATENT ABSTRACTS OF JAPAN, vol. 8, no.**
**184 (C-239)[1621], 23 août 1984, page 20 C 239;**
**& JP-A-59 76 837 (MITSUBISHIKEIKINZOKU**
**KOGYO K.K.) 02-05-1984**

(56) Documents cités :
**PATENT ABSTRACTS OF JAPAN, vol. 10, no.**
**98 (C-339)[2155], 15 avril 1986, page 84 C 339;**
**& JP-A-60 228 625 (NIHONKEIKINZOKU K.K.)**
**13-11-1985**

(73) Titulaire : **ALUMINIUM PECHINEY**
**23, rue Balzac**
**F-75008 Paris Cédex 08 (FR)**

(72) Inventeur : **Pouliquen, Benoît**
**83, avenue d'Italie**
**F-75013 Paris (FR)**
Inventeur : **Leroy, Michel**
**Bat. A3 - Les Parcs de Rochepleine**
**F-38120 St Egrève (FR)**
Inventeur : **D'Hondt, Hubert**
**225, rue des Landes**
**F-78400 Chatou (FR)**

(74) Mandataire : **Vanlaer, Marcel et al**
**PECHINEY 28, rue de Bonnel**
**F-69433 Lyon Cédex 3 (FR)**

## Description

Cette invention est relative à un procédé de purification du gallium par solidification partielle.

Le gallium prend une place de plus en plus importante dans l'industrie où il sert à des usages très variés tels que la réalisation de revêtements de surfaces optiques, de thermomètres pour la mesure de températures élevées, de collecteurs de courant liquide dans les machines électriques, de matériaux de soudage, de ciments pour soins dentaires, etc... Néanmoins, son débouché principal est l'électronique où il est employé comme semi-conducteur sous forme de phosphure ou d'arséniure.

Mais, cette dernière application nécessite des produits de très grande pureté, supérieure à 99,9999%. Or, comme la plupart des éléments, le gallium ne se trouve pas dans la nature à l'état natif, mais associé à d'autres éléments et son extraction sous forme de métal, généralement par électrolyse de solutions aqueuses, ne permet pas d'obtenir directement la pureté souhaitée car des éléments tels que le Zn, Fe, ou Ni ne sont pas éliminés. C'est pourquoi on est obligé de soumettre ce métal à des traitements particuliers de purification. C'est ainsi par exemple que le brevet US 3088853 demandé en 1959 enseigne un procédé de purification du gallium par la méthode de développement de monocristaux qui comprend la fusion d'une quantité de gallium impur vers 38°C dans un milieu inerte, l'introduction d'un germe cristallin de gallium refroidi vers 7°C dans le bain de métal fondu, tout en maintenant une couche d'acide chlorhydrique dilué au contact dudit bain, à extraire le germe à une vitesse d'environ 0,9 cm par heure pour développer un cristal, à accroître progressivement la vitesse d'extraction à 2,5 cm par heure tandis que la température est abaissée à 32°C et à répéter les opérations ci-dessus en utilisant le cristal extrait comme matériau de départ dans chaque recristallisation successive jusqu'à ce que le degré de pureté désiré soit obtenu.

Ce procédé conduit à des puretés relativement élevées en Cu, Ag, Fe, Mg, mais aucune indication n'est donnée pour les autres éléments. De plus, la capacité de production est très faible. Ainsi, le développement d'un cristal de 2,5 cm de diamètre et de longueur 8 cm environ demande 3 à 4 heures. Or, cette cristallisation doit être répétée au moins 4 fois pour obtenir la pureté souhaitée, ce qui conduit finalement à un cristal de 250 g environ dont l'obtention aura demandé entre 12 et 16 heures, c'est-à-dire que la production est au mieux de 20 g/h.

Par ailleurs, on peut lire à la page 689 du tome VI du nouveau traité de Chimie Minérale dirigé par Paul PASCAL et paru en 1961 que parmi les différents procédés de purification du gallium : "La cristallisation fractionnée n'est pas très efficace et exige un grand nombre de cristallisations. En effet, certains métaux se concentrent dans les cristaux et d'autres dans la phase liquide. Hoffman et Scribner, qui ont étudié systématiquement la répartition des métaux entre les deux phases, dans le domaine des très petites concentrations, ont constaté que Ag, Hg, In, Pb et Sn se concentraient dans le résidu liquide; Sb, Bi, Cr, Co, Au, Fe, Mn, Mo, Ni, Os, Pd, Pt, Rh, Ru, V et Zn se concentraient dans les cristaux et que Cu et Ti se répartissaient de façon sensiblement égale entre les deux phases. Zimmerman, cependant, prépare un métal avec une teneur en impuretés inférieure à 0,005% (50 ppm) à partir d'un métal contenant 0,5% par une double cristallisation en cristal unique".

Ces éléments de l'art antérieur n'incitaient guère à retenir la cristallisation fractionnée comme moyen pour abaisser la teneur en impuretés du gallium au voisinage de la ppm.

Cependant, la demanderesse, convaincue que cette voie était intéressante du point de vue industriel, a réussi malgré ces préjugés défavorables à mener la cristallisation dans des conditions telles que les résultats obtenus infirment la plupart des enseignements de l'art antérieur.

Le procédé selon l'invention axé principalement sur la purification du gallium en ses impuretés formant avec celui-ci des eutectiques et ayant une concentration hypoeutectique par solidification partielle d'une masse liquide de gallium est caractérisé en ce que l'on :

– refroidit localement ladite masse de façon à la transformer partiellement en cristaux plus purs que le liquide dans un dispositif comportant un récipient fermé à sa partie supérieure par un couvercle et à sa partie inférieure par une dame susceptible de se déplacer à l'intérieur dudit récipient;

– sépare les cristaux accrochés aux parois du dispositif et les rassemble dans la partie supérieure du récipient tandis qu'on laisse s'échapper le liquide chargé en impuretés du côté de la dame opposé au côté en contact avec les cristaux;

– exerce au moyen de la dame une pression sur les cristaux rassemblés de façon à former un amas cristallin aussi compact que possible tandis qu'on continue à laisser s'échapper le liquide;

– évacue le liquide du récipient;

– récupère les cristaux purifiés et les refond.

Ainsi, l'invention porte plus particulièrement sur l'élimination des impuretés susceptibles de former avec le gallium un alliage eutectique, ces impuretés ayant une teneur hypoeutectique c'est-à dire inférieure à celle de la composition eutectique.

Certes, il est connu que lorsqu'on fond un métal contenant de telles impuretés puis le refroidit, on génère

2

d'abord les cristaux constitués par une solution solide du métal de base appauvri en impuretés. Partant de ce principe, on réalise la purification en plaçant une masse de métal liquide dans un récipient puis la refroidit localement au moyen de dispositifs convenables de manière à provoquer une cristallisation et sépare les cristaux plus purs du liquide-mère résiduel avant d'atteindre la solidification complète.

Cependant, le gallium possède des propriétés particulières; ainsi, sa température de fusion est très basse (29,8°C), il présente un phénomène de surfusion important; ses cristaux sont très peu malléables à la température ambiante; de plus, à la différence de tous les autres métaux sauf le bismuth et le silicium, il a une masse spécifique plus faible à l'état solide qu'à l'état liquide, ce qui entraîne une remontée des cristaux à la surface du bain où ils se forment.

C'est pourquoi la demanderesse a dû trouver des moyens de cristallisation appropriés à ces particularités de manière à en exacerber l'efficacité. C'est ainsi que le refroidissement est réalisé dans un récipient fermé en haut par un couvercle et en bas par une dame mobile. De cette manière, les cristaux peuvent remonter naturellement vers le haut du récipient sans être gênés par aucun obstacle, ce qui favorise leur séparation du liquide-mère où ils se sont formés. Mais, de préférence, pour faciliter leur regroupement, on imprime à la dame un mouvement de bas en haut qui accélère leur mouvement naturel.

De préférence également, le refroidissement est localisé à une zone de hauteur limitée, située à l'extérieur et en bas de la paroi latérale du récipient et à un niveau supérieur à celui de la dame lorsque celle-ci est en position basse. Cette zone forme une couronne, dont certains points seulement sont refroidis de façon à créer des îlots de cristaux et non un anneau continu, ce qui réduit leur tendance à s'accrocher à la paroi.

Néanmoins, le plus souvent, on n'est pas maître complètement de ce phénomène d'accrochage et il est nécessaire de séparer les cristaux des parois soit du récipient, soit de la dame, ce qui peut être réalisé par tout moyen convenable mais, de préférence, par raclage de la paroi à l'aide de tout dispositif et notamment à l'aide de la dame. Mais on peut aussi procéder à un réchauffage momentané des endroits où les cristaux sont accrochés de façon à provoquer une fusion superficielle et faciliter éventuellement l'effet de raclage de la dame ou de tout autre dispositif.

Puis, les cristaux décrochés, de même que ceux qui flottent dans la masse liquide, sont assemblés dans le haut du récipient par élévation de la dame. Des ouvertures pratiquées dans l'épaisseur de la dame ou un jeu suffisant de cette dernière par rapport aux parois du récipient permettent au liquide de s'échapper du côté de la dame opposée à celui qui est en contact avec les cristaux.

Puis la dame continue sa progression vers le haut de manière à exercer une pression suffisante sur les cristaux rassemblés pour des mettre en contact les uns avec les autres et former ainsi un amas cristallin aussi compact que possible et qui du fait du passage continu du liquide-mère au-dessous de la dame voit sa pollution par ce dernier diminuer progressivement.

De préférence, la pression exercée est telle que l'on provoque finalement une déformation des amas de manière à réduire au minimum les espaces libres existant entre les cristaux.

Après cette opération, le liquide est évacué du récipient, la dame est abaissée et on laisse l'amas cristallin s'égoutter jusqu'à cessation de tout écoulement.

On peut alors récupérer l'amas de cristaux qui sont encore revêtus d'une couche superficielle de liquide impur adhérente et inséparable par égouttage. Cette couche peut être éliminée de préférence par traitement à l'aide d'un solvant tel que l'acide chlorhydrique ou l'acide nitrique, opération qui peut se faire dans le dispositif de cristallisation en introduisant le solvant par un orifice convenable placé sur le couvercle.

Enfin, l'amas traité est refondu et de préférence filtré pour éliminer toute trace de solide en suspension.

Il est évident qu'un tel procédé peut être facilement transposé à un élément tel que le bismuth.

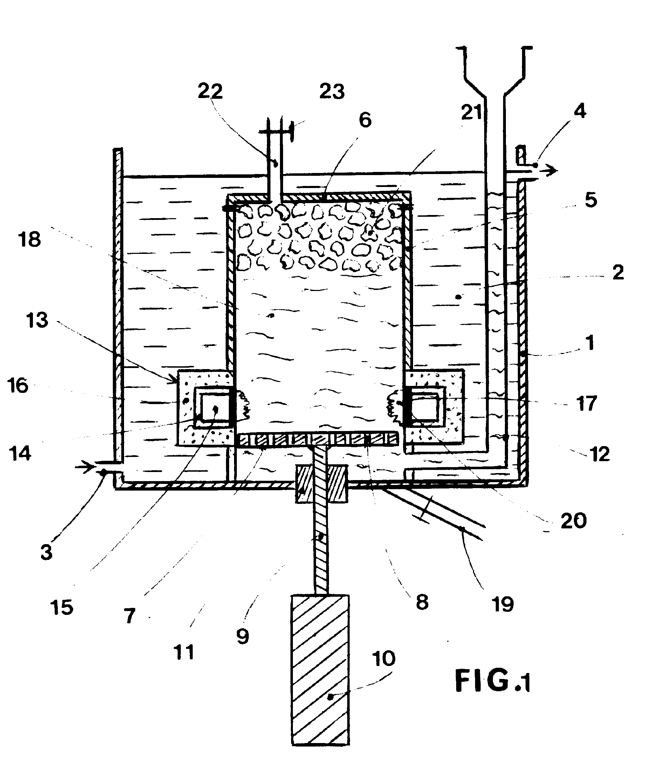

L'invention sera mieux comprise à l'aide de la figure ci-jointe qui représente une coupe verticale suivant son axe d'un appareil permettant la mise en oeuvre du procédé revendiqué. On y voit la cuve 1 contenant de l'eau 2 à température constante amenée et évacuée respectivement par les tuyauteries 3 et 4 et dans laquelle est plongé le dispositif constitué par le récipient cylindrique 5 fermé par le couvercle 6 étanche équipé d'une tuyauterie 22 de mise à l'air et d'un robinet 23 et la dame 7 placée à l'intérieur dudit récipient, percée d'ouvertures 8 et reliée vers le bas à la tige de piston 9 mue par le vérin 10 et se déplaçant au contact de la garniture d'étanchéité 11. La paroi latérale du récipient 5 est munie de la pipe d'expansion 12 et garnie sur sa périphérie et suivant une couronne de zones 13 distinctes et régulièrement réparties comportant la boîte 14 isolée thermiquement de l'eau par une couche 16 de matériau convenable et dans laquelle circule un fluide 15 qui assure des échanges thermiques par l'intermédiaire des plots 17 avec le gallium liquide 18 qu'on peut envoyer dans le récipient 5 ou évacuer à l'aide de la tuyauterie 19.

En fonctionnement, l'eau 2 circule dans la cuve 1, le récipient 5 est rempli de gallium liquide par l'intermédiaire de la pipe 12, le robinet 23 étant ouvert pour la circonstance et les boîtes 14 sont alimentées avec un fluide frigoporteur. Par solidification du gallium au contact des plots 17 refroidis, des cristaux 20 de gallium purifié se forment. Puis, on substitue au fluide frigoporteur un fluide caloporteur et fait fonctionner le vérin 10 pour déplacer la dame vers le haut, déplacement qui est facilité par la présence de la pipe d'expansion 12. Sous l'action conjuguée du réchauffement des plots 17 et de l'effet de raclage des parois par la dame, les cristaux 20 sont détachés des plots. Du fait que le gallium solide a une masse spécifique plus faible que le gallium liquide, les cristaux détachés ont tendance à remonter. De toute façon, la dame poursuivant son ascension les refoule contre le couvercle 6 puis exerce sur eux une pression suffisante pour former un amas 21 aussi compact que possible tandis que le gallium liquide s'échappe vers le bas par les ouvertures 8. Enfin, la dame revient à sa position initiale. Cette série d'opérations est répétée jusqu'à atteindre dans le haut du récipient 5 une hauteur de cristaux convenable. A ce moment, le gallium liquide résiduel est évacué par la tuyauterie 19 et les cristaux de gallium purifié sont récupérés, puis refondus, filtrés et éventuellement retraités pour accroître leur pureté.

L'invention peut être illustré à l'aide de l'exemple d'application suivant: un dispositif entièrement en téflon constitué par un récipient cylindrique de capacité 1,3 litre, muni d'une pipe d'expansion servant également à l'alimentation en gallium, garnie sur sa paroi latérale de 25 zones comportant des plots en cuivre de diamètre 4 mm recouverts d'un film organique protecteur, équipé intérieurement d'une dame traversée par des ouvertures, a été plongé dans une cuve d'eau maintenue à 35°C.

8 kg de gallium liquide portés à une température de 35°C protégés contre l'oxydation par un film d'acide chlorhydrique ont été introduits par la pipe dans ledit recipient, la dame étant en position basse.

On a fait circuler de l'eau à 15°C pendant 1 minute dans chacune des boîtes des 25 zones de manière à provoquer la formation de cristaux de gallium purifié sur chacun des plots. Puis, de l'eau à 40°C a été introduite pendant 20 secondes dans les boîtes de façon à faciliter le décollement des cristaux qui ont ensuite été entraînés par le piston dans son mouvement d'ascension puis tassés contre le couvercle du récipient sous forme d'amas. Enfin, le piston a été abaissé et on a recommencé le cycle jusqu'à atteindre une hauteur de cristaux également à 70% de la hauteur du récipient. Le piston a alors été maintenu en position haute, la circulation de fluide a été arrêtée et le gallium liquide résiduel vidangé par la tuyauterie d'évacuation.

On a alors rempli le récipient avec de l'acide chlorhydrique 3N puis envoyé de l'eau à 40°C dans la cuve afin de fondre l'amas cristallin. Le gallium liquide a alors été soutiré puis filtré. On a ainsi obtenu 3,7 kg de gallium purifié.

Les teneurs initiale et finale en impuretés du gallium traité suivant l'invention sont données dans le tableau suivant :

| : | Impuretés | : | Cr | : | Ni | : | Fe | : | Zn | : | Ca | : | Mg | : | In | : |
|---|---|---|---|---|---|---|---|---|---|---|---|---|---|---|---|---|
| : Teneur initiale en ppm massique | : | 0,7 | : | 0,7 | : | 1,4 | : | 0,2 | : | 1,7 | : | 0,12 | : | 0,016 | : |
| : Teneur finale en ppm mass. | : | <0,007 | : | <0,05 | : | 0,06 | : | <0,05 | : | 0,06 | : | 0,02 | : | 0,0037 | : |

Ainsi, il reste environ 0,25 ppm d'impuretés, c'est-à-dire qu'on a obtenu un gallium titrant 99,999975% répondant aux spécifications de l'industrie de l'électronique.

**Revendications**

1. Procédé de purification du gallium en ses impuretés formant avec celui-ci des eutectiques et ayant une concentration hypoeutectique par solidification partielle d'une masse liquide dudit gallium caractérisé en ce que l'on:

– refroidit localement ladite masse de façon à la transformer partiellement en cristaux plus purs que le liquide dans un dispositif comportant un récipient fermé à sa partie supérieure par un couvercle et à sa partie inférieure par une dame susceptible de se déplacer à l'intérieur dudit récipient

– sépare les cristaux accrochés aux parois du dispositif et les rassemble dans la partie supérieure du récipient tandis qu'on laisse s'échapper le liquide chargé en impuretés du côté de la dame opposée au côté en contact avec les cristaux

– exerce au moyen de la dame une pression sur les cristaux rassemblés de façon à former un amas cristallin aussi compact que possible tandis qu'on continue à laisser s'échapper le liquide

– évacue le liquide du récipient

– récupère les cristaux purifiés et les refond.

2. Procédé selon la revendication 1 caractérisé en ce que l'on refroidit la masse dans au moins une partie d'une zone située à l'extérieur et vers le bas de la paroi latérale du récipient.

3. Procédé selon la revendication 1 caractérisé en ce que les cristaux sont séparés des parois par raclage.

4. Procédé selon la revendication 1 caractérisé en ce que les cristaux sont séparés des parois par réchauffage momentané des endroits où ils se sont accrochés.

5. Procédé selon la revendication 1 caractérisé en ce que l'on rassemble les cristaux par un mouvement de bas en haut de la dame.

6. Procédé selon la revendication 1 caractérisé en ce que après avoir formé l'amas cristallin on provoque une déformation dudit amas.

7. Procédé selon la revendication 1 caractérisé en ce qu'on laisse s'égoutter l'amas cristallin après avoir évacué le liquide.

8. Procédé selon la revendication 1 caractérisé en ce que l'on élimine les impuretés contenues dans la couche superficielle de liquide impur encore adhérente à la surface des cristaux purifiés à l'aide d'un solvant.

9. Procédé selon la revendication 1 caractérisé en ce que la refusion est suivie d'une filtration.


**Patentansprüche**

1. Verfahren zur Reinigung des Galliums von seinen Verunreinigungen, die mit ihm Eutektika bilden und eine hypoeutektische Konzentration haben, durch teilweise Erstarrung einer flüssigen Masse des Galliums, **dadurch gekennzeichnet,**
daß man:

– die Masse örtlich derart abkühlt, um sie teilweise in reinere Kristalle als die Schmelze in einer Vorrichtung umzuwandeln, die einen Behälter aufweist, der an seinem oberen Teil durch einen Deckel und an seinem unteren Teil durch eine Lochplatte geschlossen ist, die sich zum Verschieben im Inneren des Behälters eignet

– die an den Wänden der Vorrichtung haftenden Kristalle abtrennt und sie im oberen Teil des Behälters sammelt, während man die mit Verunreinigungen beladene Schmelze an der der Seite im Kontakt mit den Kristallen entgegengesetzten Seite der Lochplatte entweichen läßt

– mittels der Lochplatte auf die gesammelten Kristalle einen Druck derart ausübt, um eine möglichst kompakte Kristallanhäufung zu bilden, während man fortfährt, die Schmelze entweichen zu lassen

– die Schmelze aus dem Behälter entleert

– die gereinigten Kristalle erfaßt und sie einschmilzt.

2. Verfahren nach dem Anspruch 1, dadurch gekennzeichnet, daß man die Masse in wenigstens einem Teil einer Zone abkühlt, die außerhalb und zum Boden der Seitenwand des Behälters hin liegt.

3. Verfahren nach dem Anspruch 1, dadurch gekennzeichnet, daß die Kristalle durch Abkratzen von den Wänden getrennt werden.

4. Verfahren nach dem Anspruch 1, dadurch gekennzeichnet, daß die Kristalle von den Wänden durch momentanes Wiedererhitzen der Stellen, wo sie anhaften, getrennt werden.

5. Verfahren nach dem Anspruch 1, dadurch gekennzeichnet, daß man die Kristalle durch eine Bewegung der Lochplatte von unten nach oben sammelt.

6. Verfahren nach dem Anspruch 1, dadurch gekennzeichnet, daß man nach dem Bilden der Kristallanhäufung eine Verformung der Anhäufung vornimmt.

7. Verfahren nach dem Anspruch 1, dadurch gekennzeichnet, daß man nach dem Entleeren der Schmelze die Kristallanhäufung abtropfen läßt.

8. Verfahren nach dem Anspruch 1, dadurch gekennzeichnet, daß man die in der noch an der Oberfläche der gereinigten Kristalle haftenden Oberflächenschicht von unreiner Schmelze enthaltenen Verunreinigungen mit Hilfe eines Lösungsmittels entfernt.

9. Verfahren nach dem Anspruch 1, dadurch gekennzeichnet, daß auf das Einschmelzen ein Filtrieren folgt.

## Claims

1. A process for the purification of gallium in respect of the impurities thereof which with same form eutectics and having a hypoeutectic concentration by partial solidification of a liquid mass of said gallium characterised by:
   – locally cooling said mass so as to transform it partially into purer crystals than the liquid in a device comprising a container closed in its upper portion by a cover and in its lower portion by a dam capable of being displaced within said container;
   – separating the crystals clinging to the walls of the device and collecting them in the upper portion of the container while allowing the liquid which is charged with impurities to escape on the side of the dam which is opposite to the side in contact with the crystals;
   – applying a pressure by means of the dam to the collected crystals so as to form a crystalline accumulation which is as compact as possible while continuing to allow the liquid to escape;
   – discharging the liquid from the container; and
   – recovering the purified crystals and re-melting them.

2. A process according to claim 1 characterised by cooling the mass in at least a part of a zone disposed outside and towards the bottom of the side wall of the container.

3. A process according to claim 1 characterised in that the crystals are separated from the walls by scraping.

4. A process according to claim 1 characterised in that the crystals are separated from the walls by momentary heating of the locations at which they are clinging to the walls.

5. A process according to claim 1 characterised by assembling the crystals by an upward movement of the dam.

6. A process according to claim 1 characterised in that, after the crystalline accumulation has been formed, said accumulation is subjected to deformation.

7. A process according to claim 1 characterised by allowing the crystalline accumulation to drain after the liquid has been discharged.

8. A process according to claim 1 characterised by removing the impurities contained in the surface layer of impure liquid which still clings to the surface of the purified crystals by means of a solvent.

9. A process according to claim 1 characterised in that the re-melting operation is followed by a filtration operation.

FIG.1